# EUROPÄISCHE PATENTSCHRIFT

(11) **EP 2 942 972 B1**
(45) Veröffentlichungstag und Bekanntmachung des Hinweises auf die Patenterteilung: **06.03.2019**
(21) Anmeldenummer: 15166305.1
(22) Anmeldetag: 04.05.2015
(51) Int. Cl.: H04Q 9/00, E03F 7/12, G06T 1/00, E03F 9/00

(54) **INSPEKTIONSSYSTEM MIT DRAHTLOSER DATENÜBERTRAGUNG**
INSPECTION SYSTEM WITH WIRELESS TRANSMISSION OF DATA
SYSTÈME D'INSPECTION DOTÉ D'UNE TRANSMISSION DE DONNÉES SANS FIL

(30) Priorität: 05.05.2014 DE 202014102093 U
(43) Veröffentlichungstag der Anmeldung: 11.11.2015
(73) Patentinhaber: iPEK International GmbH, 87477 Sulzberg (DE)
(72) Erfinder: Zahnd, Fabian, 87437 Kempten (DE); Henn, Peter, 87452 Krugzell (DE); Kennerknecht, Gerhard, 87561 Oberstdorf (DE)
(74) Vertreter: 2s-ip Schramm Schneider Bertagnoll Patent- und Rechtsanwälte Part mbB

(56) Entgegenhaltungen:
- DE-A1-102013 100 960
- DE-B3-102013 101 624
- US-A1- 2013 072 113
- DATABASE WPI Week 199745 Thomson Scientific, London, GB; AN 1997-484403 XP002744607, -& JP H09 225060 A (MITSUBISHI JUKOGYO KK) 2. September 1997 (1997-09-02)

## Beschreibung

### Gebiet der Erfindung

Die Erfindung betrifft ein Inspektionssystem zur Inspektion und/oder Reinigung von Rohrleitungen, welches angepasst ist, Steuer- und/oder Messdaten drahtlos zu übertragen, sowie einen Repeater für ein erfindungsgemäßes Inspektionssystem zur Erhöhung der Reichweite einer drahtlosen Kommunikationsverbindung.

### Hintergrund der Erfindung und Stand der Technik

Im Bereich der Kanalinspektion und/oder Kanalreinigung ist es bekannt, Kanalinspektionssysteme bzw. Kanalreinigungssysteme zu verwenden, die in das zu inspizierende Rohr bzw. Kanal eingebracht werden können und im Kanalrohr verfahren werden können. Zur Reinigung von Kanalrohren ist es bekannt, Reinigungsvorrichtungen, etwa Hochdruckspüleinrichtungen, zu verwenden. Sowohl die Kanalinspektionssysteme als auch die Reinigungsvorrichtungen können Sensoren aufweisen, mit denen unterschiedliche Messdaten während der Inspektion bzw. während der Reinigung erfasst werden können. Die Kanalinspektionssysteme bzw. Reinigungsvorrichtungen können auch Kameras aufweisen, mit denen das Innere eines Kanalrohres optisch inspiziert werden kann.

Die aufgenommenen Messdaten bzw. Bilddaten müssen an eine außerhalb des Rohrsystems angeordnete Kontrolleinrichtung übertragen werden, wo sie ausgewertet und gegebenenfalls weiterverarbeitet werden können. Hierzu ist es bekannt, die Kanalinspektionssysteme bzw. Reinigungsvorrichtungen über eine Kabelverbindung mit der Kontrolleinrichtung zu verbinden. Nachteilig bei der Datenübertragung über Kabelverbindungen ist allerdings die begrenzte Übertragungslänge durch die begrenzte Länge der Kabelverbindung.

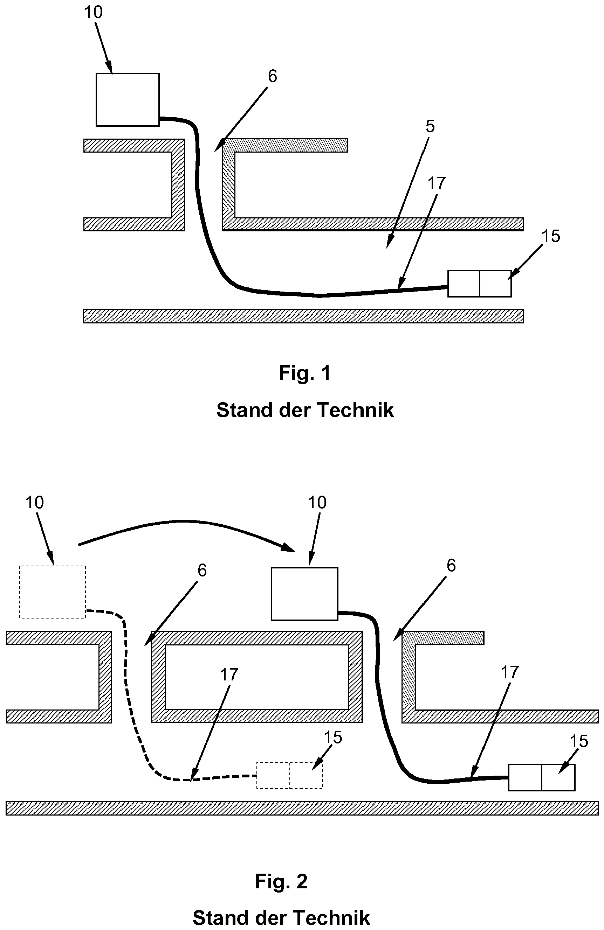

**Fig. 1** zeigt eine erste aus dem Stand der Technik bekannte Lösung, bei der eine Reinigungsvorrichtung 15 über einen Spülschlauch 17 mit einer Kontrolleinrichtung 10 gekoppelt ist. Zusätzlich zum Spülschlauch 17 sind auch Daten- und/oder Stromleitungen vorgesehen, um Daten von der Reinigungsvorrichtung 15 an die Kontrolleinrichtung 10 zu übertragen.

Um dennoch längere Strecken inspizieren bzw. reinigen zu können, muss das gesamte Inspektions- bzw. Reinigungssystem umgesetzt werden, wie in **Fig. 2** gezeigt. Wie aus Fig. 2 ersichtlich, muss die Kontrolleinrichtung 10 zum nächsten Schacht 6 umgesetzt bzw. verbracht werden, um den nächsten bzw. einen weiteren Rohr- bzw. Kanalabschnitt inspizieren bzw. reinigen zu können.

Aus der DE 10 2013 101 624 B3 ist ein Rohrinspektionssystem bekannt, bei dem zwischen einer Kontrolleinrichtung und einer Inspektionseinheit eine drahtlose Kommunikationsverbindung eingerichtet werden kann. Über einen Schlauch kann Spülwasser der Inspektionseinheit zugeführt werden. Zur Vergrößerung der Reichweite der Kommunikationsverbindung kann ein Repeater vorgesehen sein, der an dem Schlauchmantel angeordnet werden kann oder der zwischen zwei Schlauchabschnitten angeordnet werden kann und mit den dem beiden Schlauchabschnitten gekoppelt werden kann.

Aus der DE 10 2013 100 960 A1 ist ein Rohrinspektionssystem bekannt, bei dem Videodaten von einer Bildaufnahmeeinrichtung drahtlos an eine Kontrolleinrichtung übertragen werden können. Zur Vergrößerung der Reichweite der Kommunikationsverbindung zwischen der Bildaufnahmeeinrichtung und der Kontrolleinrichtung kann zwischen der Bildaufnahmeeinrichtung und der Kontrolleinrichtung ein Repeater angeordnet werden.

Aus der JP 09225060 ist ein Repeater bekannt, der an einer Außenwandung eines Rohres angeordnet ist, wobei das Rohr mit zwei Schlauchabschnitten lösbar koppelbar ist.

### Aufgabe der Erfindung

Aufgabe der vorliegenden Erfindung ist es daher, die aus dem Stand der Technik bekannten Nachteile zumindest teilweise zu vermeiden und Lösungen bereitzustellen, mit denen die Reichweite einer drahtlosen Kommunikationsverbindung zwischen einer im Kanal angeordneten Sendeeinrichtung und einer außerhalb des Kanals angeordneten Empfangseinrichtung vergrößert werden kann, um so erheblich längere Rohr- bzw. Kanalabschnitte in einem Arbeitsvorgang inspizieren bzw. reinigen zu können, ohne dass die Kontrolleinrichtung oder diverse Reflektoren umgesetzt werden müssten.

### Erfindungsgemäße Lösung

Erfindungsgemäß wird diese Aufgabe mit einem Inspektionssystem zur Inspektion und/oder Reinigung von Rohrleitungen sowie einen Repeater für ein erfindungsgemäßes Inspektionssystem nach den unabhängigen Ansprüchen gelöst. Vorteilhafte Weiterbildungen und Ausgestaltungen der Erfindung sind in den jeweiligen abhängigen Ansprüchen angegeben.

Bereitgestellt wird demnach ein Inspektionssystem zur Inspektion und/oder Reinigung von Rohrleitungen, wobei das Inspektionssystem eine Inspektions- und/oder Reinigungseinrichtung und eine Kontrolleinrichtung umfasst und wobei das Inspektionssystem eine der Kontrolleinrichtung zugeordnete erste Sende-/Empfangseinrichtung und eine der Inspektions- und/oder Reinigungseinrichtung zugeordnete zweite Sende-/Empfangseinrichtung zur drahtlosen Übertragung von Steuer- und/oder Messdaten zwischen der Inspektions- und/oder Reinigungseinrichtung und der Kontrolleinrichtung umfasst, wobei die zweite Sende-/Empfangseinrichtung angepasst ist, eine drahtlose Kommunikationsverbindung zu der der Kontrolleinrichtung zugeordneten ersten Sende-/Empfangseinrichtung einzurichten, wobei das Inspektionssystem wenigstens einen in der zu inspizierenden und/oder zu reinigenden Rohrleitung anordenbaren Repeater mit einem Antennensystem oder wenigsten einer Antenne umfasst, wobei die Inspektions- und/oder Reinigungseinrichtung über einen Schlauch mit der Kontrolleinrichtung koppelbar und/oder verbindbar ist, und wobei der wenigstens eine Repeater in den Mantel des Schlauches integriert ist oder an einer Schlauchinnenwandung des Schlauches angeordnet ist und von einer wasserdichten Ummantelung umgegeben ist.

Der Repeater kann operativ zwischen der ersten Sende-/Empfangseinrichtung und der zweiten Sende-/Empfangseinrichtung angeordnet sein und angepasst sein, die Reichweite einer zwischen der ersten Sende-/Empfangseinrichtung und der zweiten Sende-/Empfangseinrichtung eingerichteten drahtlosen Kommunikationsverbindung zu erhöhen.

Die drahtlose Kommunikationsverbindung kann eine WLAN-Kommunikationsverbindung umfassen.

Der Schlauch kann hierbei einen Spülschlauch, über den Spülwasser der Reinigungseinrichtung zugeführt wird, umfassen.

Die Inspektions- und/oder Reinigungseinrichtung kann eine Spüleinrichtung, insbesondere eine Spüldüse, umfassen.

In einer Ausgestaltung der Erfindung kann die Spüldüse eine Kamera aufweisen, wobei Aufnahmen der Kamera über die zweite Sende-/Empfangseinrichtung drahtlos zur ersten Sende-/Empfangseinrichtung übertragbar sind und/oder wobei für die Kamera und/oder Spüldüse vorgesehene Steuerbefehle über die erste Sende-/Empfangseinrichtung drahtlos zur zweiten Sende-/Empfangseinrichtung übertragbar sind.

In einer besonders vorteilhaften Ausgestaltung der Erfindung kann der Repeater eine Vorrichtung zur Umwandlung von kinetischer Energie des Spülwassers in elektrische Energie aufweisen, wobei die Vorrichtung zumindest eine Wasserturbine und zumindest einen Generator aufweist, wobei zumindest die Wasserturbine zumindest teilweise in dem axialen Kanal des Repeaters angeordnet ist.

Ferner kann der Repeater einen Akkumulator aufweisen, der mit dem Generator gekoppelt ist, wobei der Akkumulator und/oder der Generator den Repeater mit elektrischer Energie versorgt.

Bei einer Anordnung des Repeaters in den Mantel bzw. an der Schlauchinnenwandung des Schlauches ist es vorteilhaft, wenn die Antenne des Repeaters zumindest teilweise durch den Mantel des Schlauches nach außen geführt ist.

Die Antenne des Repeaters kann durch ein an der Außenwandung des Schlauches angeordnetes antennenfähiges Material gebildet sein.

In einer Ausgestaltung der Erfindung kann das antennenfähige Material den Mantel des Schlauches in radialer Richtung zumindest teilweise umgeben. Damit kann eine gleichmäßige Ausbreitung des Funksignals weitgehend unabhängig von einer radialen Drehung des Schlauches gewährleistet werden.

In einer vorteilhaften Ausgestaltung der Erfindung kann eine Anzahl von Repeatern vorgesehen sein, wobei die Repeater vorzugsweise in gleichmäßigen Abständen zueinander angeordnet sind.

Der Repeater kann vorzugsweise angepasst sein, seine Sendeleistung automatisch zu erhöhen und/oder automatisch zu verringern.

Die Inspektions- und/oder Reinigungseinrichtung kann eine Reinigungsdüse mit einer in der Reinigungsdüse integrierten Inspektionskamera umfassen, wobei die Inspektionskamera vorzugsweise lösbar in der Reinigungsdüse anordenbar ist, und wobei die Inspektionskamera operativ mit der Sende-/Empfangseinrichtung gekoppelt ist.

### Kurzbeschreibung der Figuren

Weitere Einzelheiten und Merkmale der Erfindung, sowie konkrete, insbesondere vorteilhafte Ausführungsbeispiele der Erfindung ergeben sich aus der nachfolgenden Beschreibung in Verbindung mit der Zeichnung. Es zeigt:
- Fig. 1: ein aus dem Stand der Technik bekanntes Inspektionssystem;
- Fig. 2: ein weiteres aus dem Stand der Technik bekanntes Inspektionssystem;
- Fig. 3: ein Beispiel eines erfindungsgemäßen Inspektionssystems;
- Fig. 4: ein Beispiel eines Repeaters für ein Inspektionssystem (nicht zur Erfindung gehörend);
- Fig. 5: ein alternatives Beispiel eines Repeaters für ein Inspektionssystem (nicht zur Erfindung gehörend);
- Fig. 6: Varianten eines erfindungsgemäßen Repeaters, die in einem Schlauchmantel integriert sind;
- Fig. 7: eine erfindungsgemäße Inspektions- und/oder Reinigungsvorrichtung mit einer Reinigungsdüse; und
- Fig. 8: eine erfindungsgemäße Inspektions- und/oder Reinigungsvorrichtung mit einem Fahrwagen.

### Detaillierte Beschreibung der Erfindung

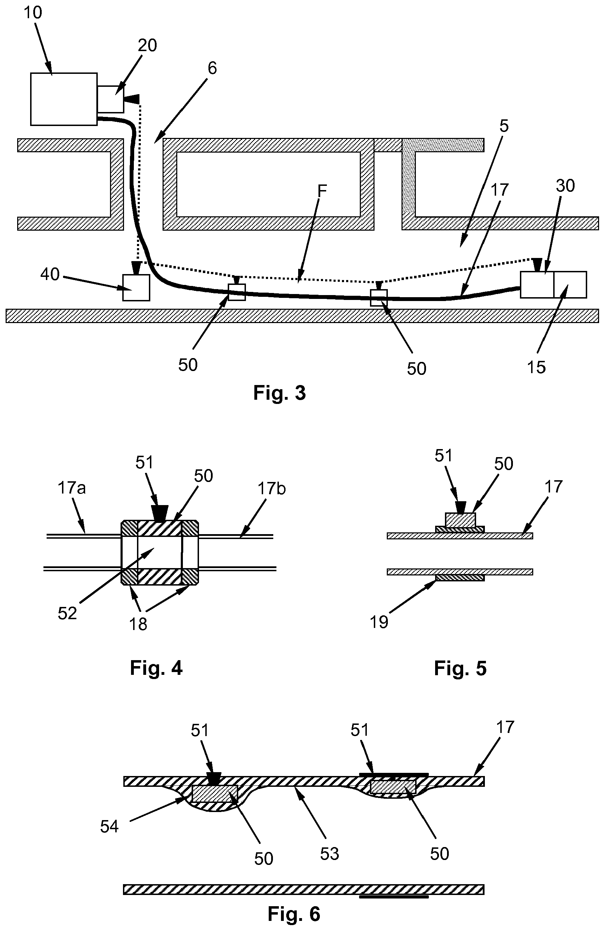

**Fig. 3** zeigt ein erfindungsgemäßes Inspektionssystem, welches ein Inspektionsfahrzeug bzw. eine Kontrolleinrichtung 10 und eine Inspektions- und/oder Reinigungseinrichtung 15 umfasst. Die Inspektions- und/oder Reinigungseinrichtung 15 kann eine Kamera und/oder Spüldüse aufweisen. In einer Ausgestaltung der Erfindung ist die Inspektions- und/oder Reinigungseinrichtung 15 als Spüldüse ausgestaltet, an dessen vorderen Ende eine Kamera angeordnet ist, sodass während eines Reinigungsvorganges gleichzeitig der Erfolg des Reinigungsvorganges überprüft werden kann. In einer alternativen Ausgestaltung kann die Inspektions- und/oder Reinigungseinrichtung einen Fahrwagen umfassen, an dem diverse Sensoreinrichtungen und/oder Kameraeinrichtungen angeordnet sein können.

Bei dem in Fig. 3 gezeigten Beispiel eines erfindungsgemäßen Inspektionssystems ist die als Spüldüse ausgestaltete Inspektions- und/oder Reinigungseinrichtung 15 über einen Spülschlauch 17 mit dem Inspektionsfahrzeug bzw. mit der Kontrolleinrichtung 10 verbunden. Über den Spülschlauch 17 wird der Reinigungsdüse Spülwasser zugeführt, welches unter hohem Druck aus der Spüldüse austritt, um die Innenwandungen des Kanalrohres 5 zu reinigen. Der Spülschlauch 17 kann an einer Haspel angeordnet sein und von dieser abgewickelt bzw. an dieser aufgewickelt werden.

Dem Inspektionsfahrzeug bzw. der Kontrolleinrichtung 10 ist eine erste Sende-/Empfangseinrichtung 20 zugeordnet, die ein Sende-/Empfangsmodul mit einer zugehörigen Sende-/Empfangsantenne aufweist. Der Inspektions- und/oder Reinigungseinrichtung 15 ist eine zweite Sende-/Empfangseinrichtung 30 zugeordnet, die ebenfalls ein Sende-/Empfangsmodul mit einer Sende- bzw. Empfangsantenne aufweist.

Erfindungsgemäß wird nun zwischen der dem Inspektionsfahrzeug bzw. der Kontrolleinrichtung 10 zugeordneten ersten Sende-/Empfangseinrichtung 20 und der dem Inspektions- und/oder der Reinigungseinrichtung 15 zugeordneten zweiten Sende-/Empfangseinrichtung 30 eine drahtlose Kommunikationsverbindung F hergestellt, über die ein Datenaustausch zwischen der Kontrolleinrichtung 10 und der Inspektions- und/oder Reinigungseinrichtung 15 abgewickelt wird. Beispielsweise können über die drahtlose Kommunikationsverbindung F die von einer Inspektionskamera aufgenommenen Video- bzw. Bilddaten an die Kontrolleinrichtung 10 übertragen werden. Alternativ oder zusätzlich können Steuerbefehle, etwa Steuerbefehle, mit denen die Spüldüse und/oder die Kamera gesteuert werden, von der Kontrolleinrichtung 10 über die drahtlose Kommunikationsverbindung F an die Inspektions- und/oder Reinigungseinrichtung 15 übertragen werden.

Die Kommunikationsverbindung F kann beispielsweise als WLAN-Verbindung ausgestaltet sein. Das Vorsehen einer WLAN-Kommunikationsverbindung hat den Vorteil, dass für Kanalinspektionssysteme bzw. Kanalreinigungssysteme keine eigene behördliche Sonderzulassung notwendig ist.

Um zu verhindern, dass mit zunehmenden Vorschub bzw. zunehmenden Vortrieb der Inspektions- und/oder Reinigungseinrichtung 15 in dem Kanalrohr 5 die Kontrolleinrichtung 10 umgesetzt werden muss, wie es bei den aus dem Stand der Technik bekannten Systemen notwendig ist, ist es erfindungsgemäß vorgesehen, ein oder mehrere Repeater 50 zwischen der ersten Sende-/Empfangseinrichtung 20 und der zweiten Sende-/Empfangseinrichtung 30 anzuordnen. Durch Einsatz der Repeater kann die Reichweite eines Signals, beispielsweise ein von der zweiten Sende-/Empfangseinrichtung 30 abgestrahltes Signal, erheblich vergrößert werden.

Der Repeater ist hierbei angepasst, die Signale eines Senders, beispielsweise der zweiten Sende-/Empfangseinrichtung zu empfangen und sie in neu aufbereiteter Form weiterzusenden, wodurch eine größere Distanz zwischen Sender und Empfänger überbrückt werden kann. Optional können die Repeater 50 angepasst sein, Rauschen sowie Verzerrungen der Laufzeit und der Pulsform aus dem empfangenen Signal zu entfernen, sodass ein neu aufbereitetes Signal weitergesendet wird. In einer Ausgestaltung der Erfindung können als Repeater 50 sogenannte WLAN-Repeater zur Erhöhung der Reichweite der drahtlosen Kommunikationsverbindung F vorgesehen sein.

In der in Fig. 3 gezeigten Ausgestaltung des erfindungsgemäßen Systems kann zudem ein stationärer Repeater 40 vorgesehen sein, der am Boden des Kanalschachtes 6 angeordnet ist und der das von dem nächsten Repeater 50 empfangene Signal durch den Kanalschacht nach außen zur ersten Sende-/Empfangseinrichtung weitersendet bzw. der das von der ersten Sende-/Empfangseinrichtung empfangene Signal zu dem nächsten Repeater 50 weitersendet. Die Verbindung zwischen der Kontrolleinrichtung 10 und dem stationärer Repeater 40 kann drahtgebunden oder drahtlos sein. Die drahtlose Verbindung zwischen der Kontrolleinrichtung 10 und dem stationärer Repeater 40 kann als WLAN-Verbindung ausgestaltet sein.

Die Repeater 50 sind in mehr oder weniger gleichmäßigen Abständen an dem Spülschlauch 17 angeordnet. Vorzugsweise sind die Repeater 50 lösbar an dem Spülschlauch befestigt, sodass der Abstand zwischen den Repeatern 50 an die Verhältnisse in dem Kanalrohr 5 angepasst werden kann, um eine möglichst optimale drahtlose Kommunikationsverbindung zwischen der ersten Sende-/Empfangseinrichtung 20 und der zweiten Sende-/Empfangseinrichtung 30 aufzubauen bzw. aufrecht zu erhalten und gleichzeitig so wenig wie möglich Repeater verwenden zu müssen.

In einer Variante der Erfindung können die Repeater 50 während des Einbringens des Spülschlauches 17 in den Kanal 5 an diesen befestigt werden. Das Anbringen der Repeater an den Schlauch 17 kann hierbei automatisch oder manuell erfolgen. Zum Anbringen der Repeater 50 an dem Schlauch 17 kann an dem Inspektionsfahrzeug 10 eine Anbringeinheit vorgesehen sein, die die Repeater an dem Schlauch 17 befestigt. Der zwischen zwei Repeatern 50 vorgesehene Abstand hängt im Wesentlichen von der Signalstärke bzw. von der Reichweite ab.

In einer alternativen Ausgestaltung des erfindungsgemäßen Systems können die Repeater 50 fest mit dem Schlauch 17 verbunden sein, d.h., die Repeater verbleiben auf bzw. an dem Schlauch und werden mit diesem auf- bzw. abgewickelt. In einer noch weiteren Ausgestaltung des erfindungsgemäßen Systems können die Repeater auch im Schlauch, beispielsweise in dem Schlauchmantel oder im Schlauchinneren angeordnet sein bzw. können die Repeater zwischen zwei Schlauchabschnitten angeordnet sein.

In einer alternativen Ausgestaltung ist es zudem möglich, die Repeater unabhängig von dem Schlauch 17 in den Kanal 5 zu verbringen, indem beispielsweise ein Kabel oder ein Seil vorgesehen ist, das zusammen mit dem Schlauch 17 in den Kanal 5 verbracht wird und an dem die Repeater 50 befestigt werden bzw. befestigt sind.

Das Befestigen der Repeater an dem Spülschlauch 17 bzw. an dem Kabel oder dem Seil hat den Vorteil, dass während des Vorschubes der Inspektions- und/oder Reinigungseinrichtung 15 in dem Kanal 5 der Abstand der Repeater 50 relativ zueinander bzw. der Abstand des ersten Repeaters zur zweiten Sende-/Empfangseinrichtung 30 im Wesentlichen immer gleich bleibt, was bei optimalen Umgebungsbedingungen in dem Kanalrohr 5 zu einer über die Zeit qualitativ gleichbleibenden Kommunikationsverbindungen führt.

Allerdings herrschen in einem Kanalrohr in der Regel keine solchen optimalen Umgebungsbedingungen, sodass die Reichweite eines von einem Repeater abgestrahlten Signals schwanken kann, was im ungünstigsten Fall zu einem Verbindungsabbruch der drahtlosen Kommunikationsverbindung F führen kann. Um solche Abbrüche der Kommunikationsverbindung F weitgehend zu vermeiden, kann es vorgesehen sein, dass die Repeater 50 angepasst sind, ihre Sendeleistung automatisch zu erhöhen und/oder automatisch zu verringern. Stellt ein Repeater 50 fest, dass ein von einem benachbarten Repeater empfangenes Signal zu schwach ist bzw. einen vorbestimmten Schwellenwert unterschreitet, kann der Repeater 50 den benachbarten Repeater anweisen, seine Sendeleistung zu erhöhen. Stellt ein Repeater hingegen fest, dass das von einem benachbarten Repeater empfangene Signal zu stark ist bzw. einen vorbestimmten Schwellenwert überschreitet, kann der Repeater 50 den benachbarten Repeater anweisen, die Sendeleistung zu verringern, wodurch der Energieverbrauch der Repeater verringert wird und gleichzeitig eine ausreichende Signalstärke für eine optimale Datenübertragung über die Kommunikationsverbindung F gewährleistet ist.

Anstelle des in Fig. 3 gezeigten stationären Repeaters 40 kann in dem Bereich, in dem der Schlauch 15 von dem Schacht 6 in das Kanalrohr 5 umgelenkt wird, ein oder mehrere zusätzliche Repeater 50 vorgesehen sein. Allerdings ist das Vorsehen eines stationären Repeaters 40 am Boden des Schachtes 6 insoweit unproblematisch, weil auf eine korrekte Ausrichtung des stationären Repeaters weitgehend verzichtet werden kann, ohne die drahtlose Kommunikationsverbindung F wesentlich zu beeinträchtigen.

Das erfindungsgemäße System mit einer Anzahl von Repeatern zwischen der ersten Sende-/Empfangseinrichtung 20 und der zweiten Sende-/Empfangseinrichtung 30 hat den Vorteil, dass die Inspektions- und/oder Reinigungseinrichtung 15 im Wesentlichen beliebig weit in das Kanalrohr 5 verbracht werden kann, ohne das Inspektionsfahrzeug bzw. die Kontrolleinrichtung oder die erste Sende-/Empfangseinrichtung 20 umsetzen zu müssen, wobei dennoch gewährleistet ist, dass eine drahtlose Kommunikationsverbindung F zwischen Sender und Empfänger eingerichtet und aufrechterhalten werden kann. Damit können Reinigungs- und/oder Inspektionsvorgänge erheblich verkürzt werden.

**Fig. 4** zeigt einen Repeater für ein Inspektionssystem. Der in Fig. 4 gezeigte Repeater ist nicht Teil der Erfindung und wird hier lediglich zum besseren Verständnis der Erfindung beschrieben.

Der Repeater 50 wird hier zwischen einem ersten Spülschlauch 17a und einem zweiten Spülschlauch 17b angeordnet, wobei zum Verbinden der beiden Schlauchendstücke mit dem Repeater 50 an den jeweiligen Schlauchendstücken angeordnete Schlauchkupplungen 18 vorgesehen sind. Der Repeater 50 weist einen axialen Kanal 52 auf, dessen Innendurchmesser im Wesentlichen gleich groß ist wie der Innendurchmesser der beiden Spülschläuche 17a, 17b.

In Fig. 4 ist ein Antennensystem 51 des Repeaters 50 in stilisierter Weise gezeigt. In einer konkreten Ausgestaltung des Repeaters 50 ist das Antennensystem 51 so ausgestaltet, dass es vor äußeren Einflüssen weitgehend geschützt ist.

Für den Betrieb des Repeaters 50 ist eine Energieversorgung notwendig, wofür beispielsweise ein in Fig. 4 nicht gezeigter Akkumulator vorgesehen sein kann. In einer weiteren Ausgestaltung des Repeaters gemäß Fig. 4 kann für die Versorgung des Repeaters 50 mit elektrischer Energie eine Vorrichtung zur Umwandlung von kinetischer Energie des Spülwassers in elektrische Energie vorgesehen sein, wobei die Vorrichtung eine Wasserturbine und einen der Wasserturbine zugeordneten Generator aufweisen kann. Die Wasserturbine kann in dem Repeater 50 so angeordnet sein, dass diese zumindest teilweise in den axialen Kanal 52 hineinragt, sodass das durch den axialen Kanal 52 hindurchfließende Spülwasser die Wasserturbine antreiben kann. In einer Ausgestaltung des Repeaters 50 kann der Generator den Repeater 50 direkt mit elektrischer Energie versorgen. Alternativ kann der Generator auch mit dem Akkumulator gekoppelt sein, um den Akkumulator aufzuladen.

**Fig. 5** zeigt eine weitere Ausgestaltung eines Repeaters 50. Der in Fig. 5 gezeigte Repeater ist nicht Teil der Erfindung und wird hier lediglich zum besseren Verständnis der Erfindung beschrieben. Der Repeater 50 weist Befestigungsmittel 19 auf, mit denen der Repeater 50 an dem Schlauch 17 vorzugsweise lösbar befestigt werden kann. Als Befestigungsmittel 19 können beispielsweise Klipse oder Schellen vorgesehen sein. Dieser Repeater 50 kann an beliebigen Stellen am Spülschlauch 17 befestigt werden. Vorzugsweise weist in dieser Ausgestaltung des Repeaters der Repeater einen Akkumulator auf, um den Repeater mit elektrischer Energie zu versorgen. Bei dieser Ausgestaltung ist in jedem Fall zu gewährleisten, dass der Repeater 50 in einem wasserdichten und/oder druckdichten Gehäuse untergebracht ist, wobei das Antennensystem 51 aus dem Gehäuse herausgeführt sein kann.

**Fig. 6** zeigt eine Ausgestaltung eines erfindungsgemäßen Repeaters 50 und dessen Anordnung an dem Spülschlauch 17.

Der in Fig. 6 gezeigte linke Repeater 50 ist an einer Innenwandung 53 des Spülschlauches 17 angeordnet und von einer Ummantelung, die den Repeater 50 im Wesentlichen wasserdicht und/oder druckdicht abschließt, umgeben. Die Ummantelung 54 kann aus dem gleichen Material sein wie der Mantel des Spülschlauches 17. Das Antennensystem 51 des Repeaters 50 ist durch den Schlauchmantel des Schlauches 17 hindurch nach außen geführt, sodass ein Abstrahlen der Signale weitestgehend ohne Beeinflussung durch den Schlauchmantel erfolgen kann. Weil der Repeater 50 nur an einer Stelle im Inneren des Spülschlauches 17 an der Schlauchinnenwandung angeordnet ist, wird der Querschnitt des Spülschlauches nur unwesentlich verringert.

Der in Fig. 6 gezeigte rechte Repeater 50 ist zumindest teilweise in den Mantel des Spülschlauches 17 eingelassen, sodass nur ein Teil des Repeaters in das Schlauchinnere hineinragt. Auch hier ist der in das Schlauchinnere hineinragende Teil des Repeaters 50 von einer Ummantelung umgeben, der den Repeater 50 wasserdicht und/oder druckdicht umschließt. Im Gegensatz zu dem linken Repeater 50 wird bei dem rechten Repeater 50 der Querschnitt des Spülschlauches noch weniger reduziert, sodass der Durchfluss des Spülwassers noch weniger beeinträchtigt wird.

Bei einer genügend großen Manteldicke des Spülschlauches 17 kann der Repeater 50 auch vollständig in den Mantel integriert sein, sodass der Repeater 50 nicht in das Innere des Schlauches 17 hineinragt.

An der Außenwandung des Schlauches 17 ist ein antennenfähiges flächiges Material 51 aufgebracht, das durch den Schlauchmantel hindurch mit dem Repeater 50 verbunden ist. In einer vorteilhaften Ausgestaltung kann dieses antennenfähige Material den Mantel des Schlauches in radialer Richtung umgeben, sodass das antennenfähige Material im Wesentlichen eine den Schlauch umgebende ringförmige Antenne 51 bildet. Dies hat den Vorteil, dass die Reichweite der von der Antenne abgestrahlten Signale weitgehend unabhängig von einer radialen Drehung des Schlauches ist.

Die in den Spülmantel integrierten Repeater können zur Energieversorgung der Repeater einen Akkumulator aufweisen.

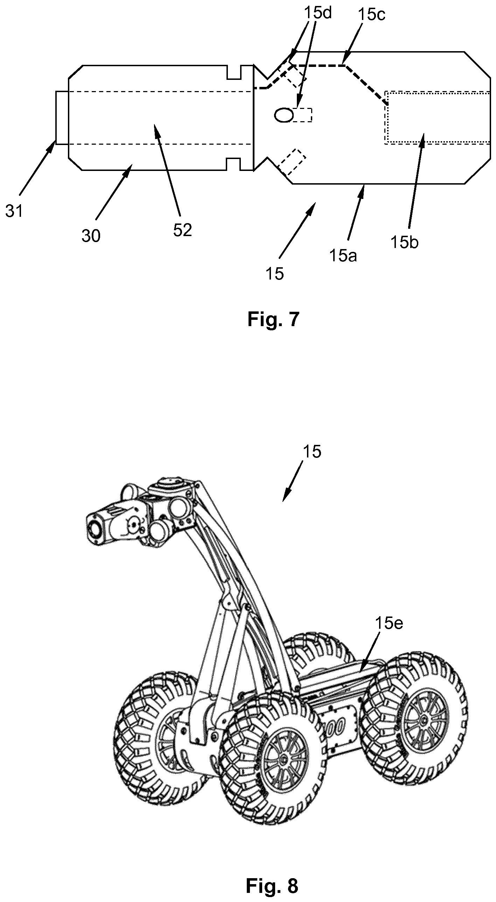

**Fig. 7** zeigt eine erfindungsgemäße Inspektions- und/oder Reinigungsvorrichtung mit einer als Reinigungs- bzw. Spülkopf bzw. Spüldüse 15a ausgestalteten Reinigungseinrichtung und mit einer erfindungsgemäßen Sende-/Empfangseinrichtung 30. Die Sende-/Empfangseinrichtung 30 ist vorzugsweise lösbar an dem hinteren Ende der Spüldüse 15a angeordnet. An der Sende-/Empfangseinrichtung 30 und an der Spüldüse 15a sind hier nicht gezeigte miteinander korrespondierende Kontaktstifte vorgesehen, über die eine elektrische Verbindung zwischen der Sende-/Empfangseinrichtung 30 und an der Spüldüse 15a hergestellt wird.

Am hinteren Ende der Sende-/Empfangseinrichtung 30 ist ein Schlauchanschluss 31 vorgesehen, an dem ein Spülschlauch angeschlossen werden kann. Der Schlauanschluss 31 verbindet den Spülschlauch mit einem in der Sende-/Empfangseinrichtung 30 vorgesehenen axialen Kanal 52, dessen Durchmesser im Wesentlichen dem Durchmesser des Spülschlauches entspricht. Das Spülwasser wird durch den Kanal 52 hindurch der Spüldüse 15a zugeführt, wo es unter hohem Druck durch eine Anzahl von Düsen 15d nach außen entweichen kann.

Der Spülkopf 15a weist an dem vorderen Ende eine axiale Aussparung auf, in die eine Kamera bzw. ein Kamerasystem 15b eingebracht wird. Die Kamera 15b ist vorzugsweise lösbar in der axialen Aussparung anordenbar, sodass die Kamera einfach gewechselt werden kann. Über ein Strom- bzw. Datenkabel 15c ist die Kamera 15b mit der Sende-/Empfangseinrichtung 30 gekoppelt, wobei der Strom- bzw. Datenkabel 15c in einem im Spülkopf 15a vorgesehenen Kabelkanal angeordnet sein kann. Vorzugsweise ist der Strom- bzw. Datenkabel 15c an einer Anzahl von Kontaktstiften angeschlossen.

Die Sende-/Empfangseinrichtung 30 ist in einem wasserdichten und vorzugsweise explosionsgeschützten Gehäuse untergebracht. Die Form des Gehäuses bzw. die äußeren Konturen der Sende-/Empfangseinrichtung 30 sind vorzugsweise so gewählt, dass sie das aus den Düsen 15d austretende Spülwasser nicht behindern.

Die von der Kamera 15b aufgenommenen Bilder werden über die Datenkabel 15c an die Sende-/Empfangseinrichtung 30 übertragen, von wo aus sie drahtlos an eine weitere Sende-/Empfangseinrichtung 20 bzw. an einen erfindungsgemäßen Repeater 50 übertragen werden.

Das Koppeln der Sende-/Empfangseinrichtung 30 an den Spülkopf 15a kann etwa über eine Schraubverbindung oder über eine Steckverbindung erfolgen, wobei zwischen der Sende-/Empfangseinrichtung 30 und dem Spülkopf 15a vorteilhafterweise ein Dichtungsring angeordnet sein kann.

In einer Ausgestaltung der Erfindung kann der Spülkopf 15a einteilig ausgestaltet sein. Er kann aber auch zwei- oder mehrteilig ausgestaltet sein. Die Sende-/Empfangseinrichtung 30 kann ebenfalls einteilig oder mehrteilig ausgestaltet sein. In einer Ausgestaltung der Erfindung ist es vorgesehen, den Spülkopf 15a und die Sende-/Empfangseinrichtung 30 einteilig auszugestalten.

**Fig. 8** zeigt eine erfindungsgemäße Inspektions- und/oder Reinigungsvorrichtung mit einer als Fahr- bzw. Inspektionswagen ausgestalteten Reinigungseinrichtung, an dem eine erfindungsgemäße Sende-/Empfangseinrichtung 30 angeordnet ist. Die Sende-/Empfangseinrichtung 30 ist hier in dem Fahrwagenkörper bzw. in dem Fahrwagengehäuse 15e angeordnet bzw. untergebracht. Alternativ kann Sende-/Empfangseinrichtung 30 auch als Aufbau an dem Fahrwagen angeordnet sein. Der Fahrwagen weist hier ferner eine Stromversorgung, vorzugsweise ein Akkumulator, auf, sodass der Fahrwagen, etwa zur Inspektion eines Kanalrohres, ohne jeglichen Anhang, etwa Kabel oder dergleichen, in das Kanalrohr verfahren werden kann. Die Datenübertragung von bzw. zu dem Fahrwagen erfolgt drahtlos über die an bzw. in dem Fahrwagen angeordnete Sende-/Empfangseinrichtung 30.

Dadurch wird vermieden, dass der Fahrwagen Kabel oder dergleichen hinter sich herziehen muss, was insbesondere bei Inspektionsfahrten in langen Rohren von Vorteil ist.

An dem Fahrwagen können beispielsweise Kamerasysteme oder sonstige Sensoren, Aktuatoren etc. angeordnet sein, die operativ mit der Sende-/Empfangseinrichtung 30 gekoppelt sein können.

Mit der vorliegenden Erfindung wird es demnach möglich, ein beliebiges mit einer zweiten Sende-/Empfangseinrichtung versehenes Gerät in einen Kanal einzubringen und in diesen fortzubewegen, wobei eine drahtlose Kommunikation zwischen der zweiten Sende-/Empfangseinrichtung und der außerhalb des Kanals angeordneten ersten Sende-/Empfangseinrichtung unabhängig von der Position der zweiten Sende-/Empfangseinrichtung in dem Kanal möglich ist, indem zwischen den beiden Sende-/Empfangseinrichtungen eine Anzahl von Repeatern vorgesehen wird, mit denen die Reichweite der drahtlosen Kommunikationsverbindung erhöht wird.

Bezugszeichen:
- 5: Rohr (z.B. Kanalrohr)
- 6: Schacht (z.B. Kanalschacht)
- 10: Inspektionsfahrzeug bzw. Kontrolleinrichtung
- 15: Inspektions- und/oder Reinigungseinrichtung (z.B. Kamera und/oder Spüldüse)
- 15a: Spülkopf bzw. Spüldüse
- 15b: Kamera bzw. Kamerasystem
- 15c: Strom-/Datenkabel angeordnet in einem Kabelkanal
- 15d: Düsen
- 15e: Fahrwagenkörper bzw. Fahrwagengehäuse
- 17: Spülschlauch
- 17a: erster Abschnitt des Spülschlauches
- 17b: zweiter Abschnitt des Spülschlauches
- 18: Schlauchkupplung
- 19: Befestigungsmittel für Repeater 50 (z.B. Klips oder Schelle)
- 20: erste Sende-/Empfangseinrichtung (z.B. Empfangseinrichtung an der Kontrolleinrichtung 10)
- 30: zweite Sende-/Empfangseinrichtung (z.B. Sendeeinrichtung an der Reinigungseinrichtung 15)
- 31: Schlauchanschluss
- 40: stationärer Repeater bzw. der Kontrolleinrichtung 10 zugeordnete erste Sende-/Empfangseinrichtung
- 50: Repeater
- 51: Antenne bzw. Antennensystem des Repeaters 50
- 52: axialer Kanal im Repeater 50
- 53: Schlauchinnenwandung des Spülschlauches 17
- 54: Ummantelung an der Schlauchinnenwandung 53
- F: drahtlose Kommunikationsverbindung (z.B. WLAN-Verbindung)

## Patentansprüche

1. Inspektionssystem zur Inspektion und/oder Reinigung von Rohrleitungen (5), wobei das Inspektionssystem eine Inspektions- und/oder Reinigungseinrichtung (15) und eine Kontrolleinrichtung (10) umfasst und wobei das Inspektionssystem eine der Kontrolleinrichtung (10) zugeordnete erste Sende-/Empfangseinrichtung (20; 40) und eine der Inspektions- und/oder Reinigungseinrichtung (15) zugeordnete zweite Sende-/Empfangseinrichtung (30) zur drahtlosen Übertragung von Steuer- und/oder Messdaten zwischen der Inspektions- und/oder Reinigungseinrichtung (15) und der Kontrolleinrichtung (10) umfasst, wobei die zweite Sende-/Empfangseinrichtung (30) angepasst ist, eine drahtlose Kommunikationsverbindung (F) zu der der Kontrolleinrichtung (10) zugeordneten ersten Sende-/Empfangseinrichtung (20; 40) einzurichten, wobei das Inspektionssystem wenigstens einen in der zu inspizierenden und/oder zu reinigenden Rohrleitung (5) anordenbaren Repeater (50) mit einem Antennensystem oder wenigsten einer Antenne umfasst, wobei die Inspektions- und/oder Reinigungseinrichtung (15) über einen Schlauch (17) mit der Kontrolleinrichtung (10) koppelbar und/oder verbindbar ist, **dadurch gekennzeichnet, dass** der wenigstens eine Repeater (50) in den Mantel des Schlauches (17) integriert ist oder an einer Schlauchinnenwandung (53) des Schlauches (17) angeordnet ist und von einer wasserdichten Ummantelung (54) umgegeben ist.

2. Inspektionssystem nach dem vorhergehenden Anspruch, wobei der Repeater (50) operativ zwischen der ersten Sende-/Empfangseinrichtung (20; 40) und der zweiten Sende-/Empfangseinrichtung (30) angeordnet ist und angepasst ist, die Reichweite einer zwischen der ersten Sende-/Empfangseinrichtung (20; 40) und der zweiten Sende-/Empfangseinrichtung (30) eingerichteten drahtlosen Kommunikationsverbindung (F), insbesondere WLAN-Kommunikationsverbindung zu erhöhen.

3. Inspektionssystem nach einem der vorhergehenden Ansprüche, wobei der Schlauch (17) einen Spülschlauch umfasst und/oder wobei die Inspektions- und/oder Reinigungseinrichtung (15) eine Spüleinrichtung, insbesondere Spüldüse umfasst.

4. Inspektionssystem nach dem vorhergehenden Anspruch, wobei die Spüldüse eine Kamera aufweist, die operativ mit der zweiten Sende-/Empfangseinrichtung (30) gekoppelt ist, und wobei Aufnahmen der Kamera über die zweite Sende-/Empfangseinrichtung (30) drahtlos zur ersten Sende-/Empfangseinrichtung (20; 40) übertragbar sind und/oder wobei für die Kamera und/oder Spüldüse vorgesehene Steuerbefehle über die erste Sende-/Empfangseinrichtung (20; 40) drahtlos zur zweiten Sende-/Empfangseinrichtung (30) übertragbar sind.

5. Inspektionssystem nach einem der vorhergehenden Ansprüche, wobei der Repeater (50) angepasst ist, seine Sendeleistung automatisch zu erhöhen und/oder automatisch zu verringern.

## Claims

1. An inspection system for the inspection and/or cleaning of pipelines (5), wherein said inspection system comprises an inspection and/or cleaning device (15) and a control device (10), and wherein the inspection system comprises a first transmitting/receiving device (20; 40) associated with the control device (10) and a second transmitting/receiving device (30) associated with the inspection and/or cleaning device (15), said transceiving devices being used for the wireless transmission of control and/or measurement data between the inspection and/or cleaning device (15) and the control device (10), wherein the second transmitting/receiving device (30) is adapted to establish a wireless communication connection (F) with the first transmitting/receiving device (20; 40) associated with the control device (10), wherein the inspection system comprises at least one repeater (50) which includes an antenna system or at least one antenna and which may be arranged within the pipeline (5) to be inspected and/or cleaned, wherein the inspection and/or cleaning device (15) is coupleable or connectible with the control device (10) via a hose (17), **characterised in that** the at least one repeater (50) is integrated into the jacket of the hose (17) or is disposed on a hose inner wall (53) of the hose (17) and is surrounded by a water-tight sheathing (54).

2. The inspection system as claimed in the preceding claim, wherein the repeater (50) is operationally disposed between the first transmitting/receiving device (20; 40) and the second transmitting/receiving device (30) and is adapted to increase the range of a wireless communication connection (F), in particular a WLAN communication connection, established between the first transmitting/receiving device (20; 40) and the second transmitting/receiving device (30).

3. The inspection system as claimed in any of the preceding claims, wherein the hose (17) comprises a flushing hose and/or wherein the inspection and/or cleaning device (15) comprises a flushing device, in particular a flushing nozzle.

4. The inspection system as claimed in the preceding claim, wherein the flushing nozzle has a camera which is operationally coupled to the second transmitting/receiving device (30), and wherein the images of the camera may be wirelessly transmitted to the first transmitting/receiving device (20; 40) via the second transmitting/receiving device (30) and/or wherein control instructions intended for the camera or for the flushing nozzle may be wirelessly transmitted to the second transmitting/receiving device (30) via the first transmitting/receiving device (20; 40).

5. The inspection system as claimed in any of the preceding claims, wherein the repeater (50) is adapted to automatically increase and/or automatically decrease its transmission power.

## Revendications

1. Système d'inspection destiné à l'inspection et/ou au nettoyage de conduits (5), le système d'inspection comprenant un dispositif d'inspection et/ou de nettoyage (15) et un dispositif de contrôle (10), et le système d'inspection comprenant un premier dispositif d'émission et de réception (20 ; 40) affecté au dispositif de contrôle (10) et un deuxième dispositif d'émission et de réception (30) affecté au dispositif d'inspection et/ou de nettoyage (15) en vue de la transmission sans fil de données de commande et/ou de mesure entre ledit dispositif d'inspection et/ou de nettoyage (15) et ledit dispositif de contrôle (10), le deuxième dispositif d'émission et de réception (30) étant conçu pour établir une liaison de communication (F) sans fil avec le premier dispositif d'émission et de réception (20 ; 40) affecté au dispositif de contrôle (10), ledit système d'inspection comprenant au moins un répéteur (50) pourvu d'un système d'antennes ou d'au moins d'une antenne lequel peut être disposé dans le conduit (5) à inspecter et/ou à nettoyer, le dispositif d'inspection et/ou de nettoyage (15) pouvant être couplé et/ou relié au dispositif de contrôle (10) grâce à un tuyau souple (17), **caractérisé en ce que** ledit au moins un répéteur (50) est intégré dans la gaine du tuyau souple (17) ou est disposé sur une paroi intérieure de tuyau (53) du tuyau souple (17) et est entouré d'une enveloppe (54) étanche à l'eau.

2. Système d'inspection selon la revendication précédente, dans lequel le répéteur (50) est disposé de manière opérationnelle entre le premier dispositif d'émission et de réception (20 ; 40) et le deuxième dispositif d'émission et de réception (30), et est conçu pour augmenter la portée d'une liaison de communication (F) sans fil, en particulier d'une liaison de communication sur réseaux locaux sans fil (WLAN), établie entre le premier dispositif d'émission et de réception (20 ; 40) et le deuxième dispositif d'émission et de réception (30).

3. Système d'inspection selon l'une quelconque des revendications précédentes, dans lequel le tuyau souple (17) comprend un flexible de rinçage et/ou le dispositif d'inspection et/ou de nettoyage (15) comprend un dispositif de rinçage, en particulier une buse de rinçage.

4. Système d'inspection selon la revendication précédente, dans lequel la buse de rinçage présente une caméra qui est couplée de manière opérationnelle au deuxième dispositif d'émission et de réception (30), et dans lequel des images de la caméra peuvent être transmises sans fil au premier dispositif d'émission et de réception (20 ; 40) via le deuxième dispositif d'émission et de réception (30), et/ou dans lequel des instructions de commande prévues pour la caméra et/ou la buse de rinçage peuvent être transmises sans fil au deuxième dispositif d'émission et de réception (30) via le premier dispositif d'émission et de réception (20 ; 40).

5. Système d'inspection selon l'une quelconque des revendications précédentes, dans lequel le répéteur (50) est conçu pour augmenter et/ou réduire automatiquement sa puissance d'émission.
